(19)

Europäisches Patentamt
European Patent Office
Office européen des brevets

(11)  **EP 3 079 267 B1**

(12)  **EUROPEAN PATENT SPECIFICATION**

(45) Date of publication and mention
of the grant of the patent:
**27.02.2019  Bulletin 2019/09**

(51) Int Cl.:
*H04B 7/04* *(2017.01)*        *H04B 7/06* *(2006.01)*
*H04L 5/00* *(2006.01)*

(21) Application number: **14874883.3**

(22) Date of filing: **08.12.2014**

(86) International application number:
**PCT/CN2014/093263**

(87) International publication number:
**WO 2015/096612 (02.07.2015 Gazette 2015/26)**

(54) **DATA TRANSMISSION METHOD AND DEVICE**

DATENÜBERTRAGUNGSVERFAHREN UND -VORRICHTUNG

PROCÉDÉ ET DISPOSITIF DE TRANSMISSION DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.12.2013  CN 201310728494**

(43) Date of publication of application:
**12.10.2016  Bulletin 2016/41**

(73) Proprietor: **Huawei Technologies Co., Ltd.
Longgang District
Shenzhen, Guangdong 518129 (CN)**

(72) Inventor: **ZHANG, Pengcheng
Shenzhen
Guangdong 518129 (CN)**

(74) Representative: **Körber, Martin Hans
Mitscherlich PartmbB
Patent- und Rechtsanwälte
Sonnenstrasse 33
80331 München (DE)**

(56) References cited:
**CN-A- 101 083 653      CN-A- 102 301 734
CN-A- 103 716 076**

• **"Further Considerations on Scenario3", 3GPP
DRAFT; R1-113064 FURTHER
CONSIDERATIONS ON SCENARIO3_HITACHI,
3RD GENERATION PARTNERSHIP PROJECT
(3GPP), MOBILE COMPETENCE CENTRE ; 650,
ROUTE DES LUCIOLES ; F-06921
SOPHIA-ANTIPOLIS CEDEX ; FRANCE, vol. RAN
WG1, no. Zhuhai; 20111010, 3 October 2011
(2011-10-03), XP050538090, [retrieved on
2011-10-03]**

**Description**

**TECHNICAL FIELD**

The present invention relates to the field of communications technologies, and in particular, to a data transmission method and device.

**BACKGROUND**

A multiple-input multiple-output (Multiple-Input Multiple-Output, MIMO) system refers to a transmission system in which multiple antennas are used at both a transmit end and a receive end of a communications link, and can turn a multi-path factor existing in a traditional communications system into a factor that is beneficial to communications performance of a user, so as to multiply a service transmission rate. A coordinated multipoint transmission/reception (Coordinated Multipoint Transmission/Reception, CoMP) technology refers to coordinated transmission between multiple network elements whose geographical locations are separated from each other. Coordinated transmission between multiple network elements can effectively reduce interference between different network elements, and improve a throughput of a user, especially a cell-edge user.

In the conventional technology, for a coordinated multipoint operation mode, a quantity of physical lanes of each of the working network elements that coordinate with each other is usually not equal, and quantities of physical lanes (which are also referred to as physical ports) of different working network elements determine a MIMO mode, that is, a downlink sending mode. Using a Long Term Evolution (Long Term Evolution, LTE) system as an example, MIMO modes include transmission mode 2 (Transmission Mode 2, TM2), TM3, TM4, TM7, TM8, and the like. Currently, in an operation mode of a single point network element, it is required that a quantity of logical lanes (which are also referred to as logical ports) that are supported by the network element is not greater than a degree of freedom of an effective antenna array of the network element, where the degree of freedom is also referred to as a quantity of physical lanes (or a quantity of physical ports). In the operation mode of the single point network element, mapping between physical lanes and logical lanes of the network element needs to satisfy a coherence requirement, which is specifically that both of multi-stream multiplexing and an optimum coherent gain need to be satisfied. Several port (port) mapping schemes in the operation mode of the single point network element are listed below:

(1) mapping between 8 physical lanes and 2 logical lanes:
$$\begin{bmatrix} \mathbf{P}^0 \\ \vdots \\ \mathbf{P}^7 \end{bmatrix} = \begin{bmatrix} \mathbf{a_0} & 0 \\ \vdots & \vdots \\ \mathbf{a_3} & 0 \\ 0 & \mathbf{a_4} \\ \vdots & \vdots \\ 0 & \mathbf{a_7} \end{bmatrix} \times \begin{bmatrix} \mathbf{P}_0 \\ \mathbf{P}_1 \end{bmatrix};$$

(2) mapping between 4 physical lanes and 4 logical lanes:
$$\begin{bmatrix} \mathbf{P}^0 \\ \vdots \\ \mathbf{P}^3 \end{bmatrix} = \begin{bmatrix} 1 & 0 & 0 & 0 \\ 0 & 1 & 0 & 0 \\ 0 & 0 & 1 & 0 \\ 0 & 0 & 0 & 1 \end{bmatrix} \times \begin{bmatrix} \mathbf{P}_0 \\ \vdots \\ \mathbf{P}_3 \end{bmatrix};$$

(3) mapping between 4 physical lanes and 2 logical lanes:
$$\begin{bmatrix} \mathbf{P}^0 \\ \vdots \\ \mathbf{P}^3 \end{bmatrix} = \begin{bmatrix} \mathbf{a_0} & 0 \\ \mathbf{a_1} & 0 \\ 0 & \mathbf{a_2} \\ 0 & \mathbf{a_3} \end{bmatrix} \times \begin{bmatrix} \mathbf{P}_0 \\ \mathbf{P}_1 \end{bmatrix};$$

(4) mapping between 2 physical lanes and 2 logical lanes:
$$\begin{bmatrix} \mathbf{P}^0 \\ \mathbf{P}^1 \end{bmatrix} = \begin{bmatrix} 1 & 0 \\ 0 & 1 \end{bmatrix} \times \begin{bmatrix} \mathbf{P}_0 \\ \mathbf{P}_1 \end{bmatrix};$$ and

(5) mapping between 1 physical lane and 1 logical lane: $\begin{bmatrix} \mathbf{P}^0 \end{bmatrix} = \begin{bmatrix} 1 \end{bmatrix} \times \begin{bmatrix} \mathbf{P}_0 \end{bmatrix}$.

Because in the operation mode of the single point network element, it is required that logical lanes of the network element are not more than physical lanes, in coordinated multipoint transmission/reception, a MIMO mode of an entire network is restricted by a network element that has a small quantity of physical lanes. For example, when an 8-lane radio remote unit (Radio Remote Unit, RRU) performs coordinated transmission with a 1-lane RRU, only 1 logical lane can be supported in the case of the coordinated transmission of the 8-lane RRU with the 1-lane RRU since the 1-lane RRU can support only 1 logical lane. In this case, the MIMO mode can support only transmission mode 1 (Transmission Mode 1, TM1), and cannot support a higher order MIMO mode. For another example, when an 8-lane RRU performs coordinated transmission with a 2-lane RRU, a maximum of only 2 logical lanes can be supported in the case of the coordinated transmission of the 8-lane RRU with the 2-lane RRU since the 2-lane RRU can support a maximum of only 2 logical lanes,. In this case, the MIMO mode can support only TM1 and TM2, and cannot support a higher order MIMO mode, such as TM3 and TM4, which therefore leads to a severe drop in performance and coverage of a network element that has a large quantity of physical lanes.

"Further Considerations on Scenario3", 3GPP Draft, TSG-RAN, WG1 #66b, Zhuhai, China, Oct. 10-14, 2011 discloses the mapping of UE-specific channel state information reference signals (CSI-RS) resources to a plurality of antenna ports in the context of CoMP. Therein, one CSI-RS is mapped to one antenna port.

To sum up, in an existing coordinated multipoint operation mode, a MIMO mode of an entire network is restricted by a network element that has a small quantity of physical lanes, and the MIMO mode being restricted leads to a severe drop in performance and coverage of a network element that has a large quantity of physical lanes.

## SUMMARY

Embodiments of the present invention provide a data transmission method and device, which are used to resolve a problem that in an existing coordinated multipoint operation mode, a MIMO mode of an entire network is restricted by a network element that has a small quantity of physical lanes.

According to a first aspect, a data transmission method for performing a coordinated multipoint, CoMP, transmission is provided, where the method includes:

dividing, by a data transmission device, N preconfigured logical lanes into M logical lane groups according to a preset mapping relationship between a logical lane and a physical lane, and mapping each of the logical lane groups to a different physical lane of the data transmission device, where both M and N are positive integers, M is less than N, and M is a quantity of physical lanes of the data transmission device; and

transmitting, to a receiving device by using each of the physical lanes, a signal configured on each logical lane in a logical lane group corresponding to each of the physical lanes.

In this embodiment of the present invention, a data transmission device divides N preconfigured logical lanes into M logical lane groups according to a preset mapping relationship between a logical lane and a physical lane, and maps each of the logical lane groups to a different physical lane of the data transmission device, where both M and N are positive integers, M is less than N, and M is a quantity of physical lanes of the data transmission device; and the data transmission device transmits, to a receiving device by using the physical lanes of the data transmission device, a signal configured on each logical lane in a logical lane group corresponding to each of the physical lanes. In this way, the data transmission device can support logical lanes whose quantity is greater than the quantity of the physical lanes of the data transmission device.

With reference to the first aspect, in a first possible implementation manner, the dividing, by the data transmission device, N preconfigured logical lanes into M logical lane groups according to the mapping relationship specifically includes: evenly dividing, by the data transmission device, the N preconfigured logical lanes into the M logical lane groups according to the mapping relationship.

With reference to the first possible implementation manner of the first aspect, in a second possible implementation manner, the data transmission device evenly divides the N preconfigured logical lanes into the M logical lane groups according to the following mapping relationship, and maps each of the logical lane groups to a different physical lane of the data transmission device:

$$\begin{bmatrix} \mathbf{P}^0 \\ \vdots \\ \mathbf{P}^{M-1} \end{bmatrix} = \begin{bmatrix} b_0^0 & \cdots & b_{N-1}^0 \\ \vdots & \ddots & \vdots \\ b_0^{M-1} & \cdots & b_{N-1}^{M-1} \end{bmatrix} * \begin{bmatrix} \mathbf{P}_0 \\ \vdots \\ \mathbf{P}_{N-1} \end{bmatrix},$$

where

$\mathbf{P}_n$ represents a port number of a logical lane, where $n = 0,\cdots,N\text{-}1$, and $N$ is a quantity of logical lanes; $\mathbf{P}^m$ represents a port number of a physical lane, where $m = 0,\cdots,M\text{-}1$, $N = A*M$, and $A$ is a positive integer greater than 1; and

$\begin{bmatrix} b_0^0 & \cdots & b_{N-1}^0 \\ \vdots & \ddots & \vdots \\ b_0^{M-1} & \cdots & b_{N-1}^{M-1} \end{bmatrix}$ is a mapping matrix, where each row of the mapping matrix includes $A$ non-zero elements, locations of non-zero elements included in different rows in the mapping matrix are all different, and the non-zero elements included in each row of the mapping matrix are weighting coefficients corresponding to logical lanes included in a logical lane group corresponding to the row.

With reference to the second possible implementation manner of the first aspect, in a third possible implementation manner, norms of weighting coefficients corresponding to logical lanes included in a same logical lane group are equal.

With reference to the second possible implementation manner of the first aspect or the third possible implementation manner of the first aspect, in a fourth possible implementation manner, quadratic sums of norms of weighting coefficients corresponding to logical lanes included in any two different logical lane groups are equal.

With reference to the second possible implementation manner of the first aspect, the third possible implementation manner of the first aspect, or the fourth possible implementation manner of the first aspect, in a fifth possible implementation manner, in the mapping relationship, logical lanes that are located at same locations in different logical lane groups have a same weighting coefficient.

According to a second aspect, a data transmission device for coordinated multipoint, CoMP, transmission is provided, where the data transmission device includes:

a processing module, configured to divide N preconfigured logical lanes into M logical lane groups according to a preset mapping relationship between a logical lane and a physical lane, and map each of the logical lane groups to a different physical lane of the data transmission device, where both M and N are positive integers, M is less than N, and M is a quantity of physical lanes of the data transmission device; and

a transmission module, configured to transmit, to a receiving device by using each of the physical lanes, a signal configured on each logical lane in a logical lane group corresponding to each of the physical lanes.

When the data transmission device provided in this embodiment of the present invention transmits data to the receiving device, the data transmission device can support logical lanes whose quantity is greater than the quantity of the physical lanes of the data transmission device.

With reference to the second aspect, in a first possible implementation manner, the processing module is specifically configured to:

evenly divide the N preconfigured logical lanes into the M logical lane groups according to the mapping relationship.

With reference to the first possible implementation manner of the second aspect, in a second possible implementation manner, the processing module evenly divides the N preconfigured logical lanes into the M logical lane groups according to the following mapping relationship, and maps each of the logical lane groups to a different physical lane of the data transmission device:

$$\begin{bmatrix} \mathbf{P}^0 \\ \vdots \\ \mathbf{P}^{M-1} \end{bmatrix} = \begin{bmatrix} \mathbf{b}_0^0 & \cdots & \mathbf{b}_{N-1}^0 \\ \vdots & \ddots & \vdots \\ \mathbf{b}_0^{M-1} & \cdots & \mathbf{b}_{N-1}^{M-1} \end{bmatrix} * \begin{bmatrix} \mathbf{P}_0 \\ \vdots \\ \mathbf{P}_{N-1} \end{bmatrix},$$

where

$P_n$ represents a port number of a logical lane, where $n = 0, \cdots, N$-1, and $N$ is a quantity of logical lanes; $\mathbf{P}^m$ represents a port number of a physical lane, where $m = 0, \cdots, M$-1, $N = A*M$, and $A$ is a positive integer greater than 1; and

$$\begin{bmatrix} \mathbf{b}_0^0 & \cdots & \mathbf{b}_{N-1}^0 \\ \vdots & \ddots & \vdots \\ \mathbf{b}_0^{M-1} & \cdots & \mathbf{b}_{N-1}^{M-1} \end{bmatrix}$$ is a mapping matrix, where each row of the mapping matrix includes $A$ non-zero elements, locations of non-zero elements included in different rows in the mapping matrix are all different, and the non-zero elements included in each row of the mapping matrix are weighting coefficients corresponding to logical lanes included in a logical lane group corresponding to the row.

With reference to the second possible implementation manner of the second aspect, in a third possible implementation manner, norms of weighting coefficients corresponding to logical lanes included in a same logical lane group are equal.

With reference to the second possible implementation manner of the second aspect or the third possible implementation manner of the second aspect, in a fourth possible implementation manner, quadratic sums of norms of weighting coefficients corresponding to logical lanes included in any two different logical lane groups are equal.

With reference to the second possible implementation manner of the second aspect, the third possible implementation manner of the second aspect, or the fourth possible implementation manner of the second aspect, in a fifth possible implementation manner, in the mapping relationship, logical lanes that are located at same locations in different logical lane groups have a same weighting coefficient.

The data transmission device provided in the embodiments of the present invention can support logical lanes whose quantity is greater than a quantity of physical lanes of the data transmission device, so that when coordinated multipoint transmission/reception is performed between multiple data transmission devices, an MIMO mode is no longer restricted by a data transmission device that has a small quantity of physical lanes, and identifiable logical lanes of a data transmission device that has a large quantity of physical lanes are also not restricted. In this way, when roaming to a coordinating data transmission device (for example, a macro base station), a user can benefit from gains brought by a high order MIMO mode; when roaming to the data transmission device (for example, a micro base station) provided in the embodiments of the present invention, the user can also be adaptive or can be restricted to a low order MIMO mode by using radio resource control (Radio Resource Control, RRC) signaling, which therefore improves user experience.

**BRIEF DESCRIPTION OF DRAWINGS**

FIG. 1 is a schematic diagram of a network device according to an embodiment of the present invention;
FIG. 2 is a schematic diagram of a data transmission method according to an embodiment of the present invention; and
FIG. 3 is a schematic diagram of a data transmission device according to an embodiment of the present invention.

**DESCRIPTION OF EMBODIMENTS**

In order that in a coordinated multipoint operation mode, an MIMO mode of an entire network is not restricted by a network element that has a small quantity of physical lanes, embodiments of the present invention provide a data transmission method, and the method may be applied to communications systems, such as a Long Term Evolution (Long Term Evolution, LTE)/Long Term Evolution Advanced (LTE-Advanced, LTE-A) system, a Wideband Code Division Multiple Access (Wideband Code Division Multiple Access, WCDMA) system, a High Speed Packet Access (High Speed Packet Access, HSPA) system, and a Time Division-Synchronous Code Division Multiple Access (Time Division-Synchronous Code Division Multiple Access, TD-SCDMA) system. Descriptions are provided below by using an example in which the method is applied to the LTE system, and applications in other systems are similar to this application, and are not listed one by one herein.

The embodiments of the present invention are further described below in detail with reference to accompanying drawings of the specification.

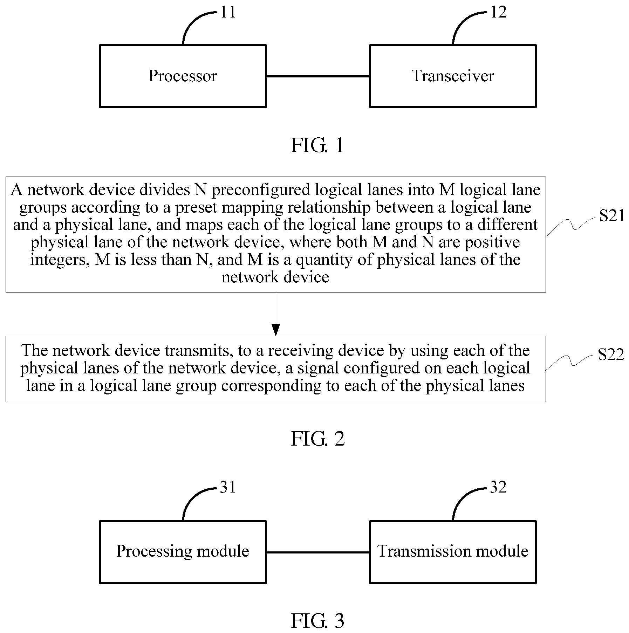

An embodiment of the present invention provides a network device, where the network device has M physical lanes. As shown in FIG. 1, the network device includes:

a processor 11, configured to divide N preconfigured logical lanes into M logical lane groups according to a preset mapping relationship between a logical lane and a physical lane, and map each of the logical lane groups to a different physical lane of the network device, where both M and N are positive integers, and M is less than N; and a transceiver 12, configured to transmit, to a receiving device by using each of the physical lanes of the network device, a signal configured on each logical lane in a logical lane group corresponding to each of the physical lanes.

When the network device provided in this embodiment of the present invention transmits data to the receiving device, the network device can support logical lanes whose quantity is greater than a quantity of the physical lanes of the network device.

In this embodiment of the present invention, the quantity N of the preconfigured logical lanes refers to a quantity of logical channels that need to be supported by the network device in an operation mode, and a value of N is greater than a quantity of physical channels of the network device; a physical lane of the network device refers to a physical port of an antenna of the network device, that is, a lane used to receive and send data.

In this embodiment of the present invention, the network device may be a macro base station (Macro), a micro base station (Micro), a pico base station (Pico), a home NodeB (which is also referred to as a femto base station (Femto)), an RRU, or the like.

This embodiment of the present invention is applicable to an application scenario in which multiple network devices coordinate to provide a service to the receiving device, and quantities of physical lanes of the network devices that coordinate with each other are different. A network device having a small quantity of physical lanes can perform mapping between a logical lane and a physical lane by using a solution of this embodiment of the present invention.

Specifically, based on the foregoing application scenario, the quantity N of the preconfigured logical lanes refers to a quantity of logical channels that need to be supported in a coordinated multipoint operation mode by the network device provided in this embodiment of the present invention and a coordinating network device, and a value of N is greater than a quantity of physical channels of the network device provided in this embodiment of the present invention, and is less than a quantity of physical channels of the coordinating network device. For example, in engineering parameters in network planning, a quantity of logical lanes of cell-specific reference signals (Cell-specific Reference Signal, CRS) that are configured for a network device having one physical lane and a network device having 8 physical lanes that are in a coordinated multipoint operation mode is 2; for another example, in engineering parameters in network planning, a quantity of logical lanes of CRSs that are configured for a network device having 2 physical lanes and a network device having 8 physical lanes that are in a coordinated multipoint operation mode is 4; for still another example, in engineering parameters in network planning, a quantity of logical lanes of lane state information (Channel State Information, CSI) that is configured for a network device having 2 physical lanes and a network device having 8 physical lanes that are in a coordinated multipoint operation mode is 8. The engineering parameters in network planning refer to parameter information that is configured when station distribution, power allocation, antenna azimuth specifying, frequency configuration, configuration of a port (port) quantity of a logical lane and a weight, and the like are performed with reference to an existing network environment scenario during network distribution and station deployment (that is, network construction).

Based on the foregoing application scenario in this embodiment of the present invention, when the network device provided in this embodiment of the present invention performs coordinated multipoint transmission/reception with a coordinating network device, the network device provided in this embodiment of the present invention can support logical lanes whose quantity is greater than a quantity of physical lanes of the network device, so that an MIMO mode is no longer restricted by a network device that has a small quantity of physical lanes, and identifiable logical lanes of a network device that has a large quantity of physical lanes are also not restricted. In this way, when roaming to the coordinating network device (for example, a macro base station), a user can benefit from gains brought by a high order MIMO mode; when roaming to the network device (for example, a micro base station) provided in this embodiment of the present invention, the user can also be adaptive or can be restricted to a low order MIMO mode by using radio resource control (Radio Resource Control, RRC) signaling, which therefore improves user experience.

During implementation, in the preset mapping relationship between a logical lane and a physical lane, a manner for grouping the preconfigured logical lanes includes multiple manners, and the grouping manner is not limited in this embodiment of the present invention. Any grouping manner may be used to perform grouping as long as the N logical lanes are divided into the M logical lane groups.

For example, assuming that a quantity of preconfigured logical lanes is 8 (port numbers thereof are recorded as $P_0$ to $P_7$), and a quantity of physical lanes of the network device is 2 (port numbers thereof are recorded as $P^0$ and $P^1$), the 8 logical lanes are divided into 2 groups; a specific grouping manner may be a manner of grouping the port numbers sequentially, that is, adding $P_0$ to $P_3$ to one group, and adding $P_4$ to $P_7$ to another group, or may be a manner of grouping the port numbers at intervals, that is, adding logical lanes whose port numbers are odd numbers (that is, $P_1$, $P_3$, $P_5$, and $P_7$) to one group, and adding logical lanes whose port numbers are even numbers (that is, $P_0$, $P_2$, $P_4$, and $P_6$) to another group.

For another example, assuming that a quantity of preconfigured logical lanes is 8 (port numbers thereof are recorded as $P_0$ to $P_7$), and a quantity of physical lanes of the network device is 4 (port numbers thereof are recorded as $P^0$ to $P^3$), the 8 logical lanes are divided into 4 groups; a specific grouping manner may be a manner of grouping the port numbers sequentially, that is, adding $P_0$ and $P_1$ to a first group, adding $P_2$ and $P_3$ to a second group, adding $P_4$ and $P_5$ to a third group, and adding $P_6$ and $P_7$ to a fourth group, or may be a manner of grouping the port numbers at intervals, for example, intervals between port numbers of logical lanes included in each group are 1, that is, adding $P_0$ and $P_2$ to a first group, adding $P_1$ and $P_3$ to a second group, adding $P_4$ and $P_6$ to a third group, and adding $P_5$ and $P_7$ to a fourth group, or intervals between port numbers of logical lanes included in each group are 3, that is, adding $P_0$ and $P_4$ to a first group, adding $P_1$ and $P_5$ to a second group, adding $P_2$ and $P_6$ to a third group, and adding $P_3$ and $P_7$ to a fourth group.

Further, in the embodiment of the present invention, in the preset mapping relationship between a logical lane and a physical lane, each of the logical lane groups is mapped to a different physical lane of the network device, and there are multiple manners for performing mapping between logical lane groups and physical lanes. A manner for performing mapping between logical lane groups and physical lanes is not limited in this embodiment of the present invention, as long as it is ensured that different logical lane groups are mapped to different physical lanes.

For example, assuming that a quantity of preconfigured logical lanes is 8 (port numbers thereof are recorded as $P_0$ to $P_7$), and a quantity of physical lanes of the network device is 2 (port numbers thereof are recorded as $P^0$ and $P^1$), the 8 logical lanes are divided into 2 groups in a manner of grouping the port numbers sequentially, that is, $P_0$ to $P_3$ are added to one group, and $P_4$ to $P_7$ are added to another group; therefore, $P_0$ to $P_3$ are mapped to $P^0$ and $P_4$ to $P_7$ are mapped to $P^1$, or $P_0$ to $P_3$ are mapped to $P^1$ and $P_4$ to $P_7$ are mapped to $P^0$.

In order to ensure that the physical lanes of the network device have equal air-interface power, preferably, the processor 11 is specifically configured to:

evenly divide the N preconfigured logical lanes into the M logical lane groups according to the preset mapping relationship between a logical lane and a physical lane, so that quantities of logical lanes mapped to each physical lane of the network device are equal, which therefore ensures air-interface power balance between the physical lanes.

Based on any one of the foregoing embodiments, the mapping relationship provided in this embodiment of the present invention is shown in the following formula 1:

$$
\begin{bmatrix} P^0 \\ \vdots \\ P^{M-1} \end{bmatrix} = \begin{bmatrix} b_0^0 & \cdots & b_{N-1}^0 \\ \vdots & \ddots & \vdots \\ b_0^{M-1} & \cdots & b_{N-1}^{M-1} \end{bmatrix} * \begin{bmatrix} P_0 \\ \vdots \\ P_{N-1} \end{bmatrix} ,
$$

where

$P_n$ represents a port number of a logical lane, where $n = 0,\cdots,N\text{-}1$, and $N$ is a quantity of logical lanes; $P^m$ represents a port number of a physical lane, where $m = 0,\cdots,M\text{-}1$, $N = A*M$, and $A$ is a positive integer; and $\begin{bmatrix} b_0^0 & \cdots & b_{N-1}^0 \\ \vdots & \ddots & \vdots \\ b_0^{M-1} & \cdots & b_{N-1}^{M-1} \end{bmatrix}$

is a mapping matrix and may also be referred to as a radiation pattern of a wave, where each row of the mapping matrix includes $A$ non-zero elements, locations of non-zero elements included in different rows in the mapping matrix are all different, and the non-zero elements included in each row of the mapping matrix are weighting coefficients corresponding to logical lanes included in a logical lane group corresponding to the row.

Based on the formula 1, specifically, the processor 11 evenly divides the N preconfigured logical lanes into the M logical lane groups according to the mapping matrix in the preset mapping relationship between a logical lane and a physical lane, and maps each of the logical lane groups to a different physical lane of the network device according to a weighting coefficient corresponding to each logical lane.

Further, in order that the physical lanes have equal air-interface power, in the foregoing mapping relationship, weighting coefficients corresponding to logical lanes included in each logical lane group should satisfy at least one of the following conditions:

first, norms of weighting coefficients corresponding to logical lanes included in a same logical lane group are equal; and

second, quadratic sums of norms of weighting coefficients corresponding to logical lanes included in any two different logical lane groups are equal.

Preferably, in the preset mapping relationship between a logical lane and a physical lane, norms of weighting coefficients corresponding to logical lanes included in a same logical lane group are equal, and quadratic sums of norms of weighting coefficients corresponding to logical lanes included in any two different logical lane groups are equal.

In order to normalize a power spectrum density of each physical lane of the network device, preferably, in the preset mapping relationship between a logical lane and a physical lane, norms of weighting coefficients corresponding to logical lanes included in a same logical lane group are equal, and quadratic sums of norms of weighting coefficients corresponding to logical lanes included in any two different logical lane groups are equal to 1.

When mapping is performed, according to preset weighting coefficients, each logical lane group is mapped to a different physical lane, and phases of weighting coefficients corresponding to logical lanes in each logical lane group may be the same, or may be different. Further, the phases of the weighting coefficients corresponding to the logical lanes in each logical lane group may be set with reference to another algorithm (for example, a PAR (Peak to Average Power Ratio) reduction algorithm).

Based on any one of the foregoing embodiments, in the preset mapping relationship between a logical lane and a physical lane, weighting coefficients corresponding to logical lanes that are located at same locations in different logical lane groups may be the same, or may be different.

Preferably, in the preset mapping relationship between a logical lane and a physical lane, weighting coefficients corresponding to logical lanes that are located at same locations in different logical lane groups are the same, so that downlink transmit power of each physical lane of the network device is more uniform.

Specifically, weighting coefficients corresponding to the first logical lanes included in different logical lane groups are equal, weighting coefficients corresponding to the second logical lanes in different logical lane groups are equal, and by analogy, weighting coefficients corresponding to the last logical lanes included in different logical lane groups are equal.

In the mapping relationship in this embodiment of the present invention, that weighting coefficients corresponding to logical lanes are the same refers to that both numerical values and phases of the weighting coefficients are the same, and that weighting coefficients corresponding to logical lanes are different refers to that numerical values of the weighting coefficients are different and/or phases of the weighting coefficients are different.

Based on any one of the foregoing embodiments, if M=2, in the mapping matrix in the formula 1, elements in the first row are the same as elements in the second row, and a sequence in which the elements in the first row are arranged is reverse to a sequence in which the elements in the second row are arranged.

Specifically, elements corresponding to logical lanes in a first logical lane group among the elements in the first row in the mapping matrix are respectively weighting coefficients corresponding to the logical lanes in the logical lane group, and values of the other elements among the elements in the first row are 0; elements corresponding to logical lanes in a second logical lane group among the elements in the second row are respectively weighting coefficients corresponding to the logical lanes in the logical lane group, and values of the other elements among the elements in the second row are 0.

For example, assuming that a quantity of preconfigured logical lanes is 4 (port numbers thereof are recorded as $P_0$ to $P_3$), and a quantity of physical lanes of the network device is 2 (port numbers thereof are recorded as $P^0$ and $P^1$), the 4 logical lanes may be mapped to the 2 physical lanes by using the following mapping relationship:

$$\begin{bmatrix} \mathbf{P}^0 \\ \mathbf{P}^1 \end{bmatrix} = \begin{bmatrix} \beta_0 & \beta_1 & \beta_2 & \beta_3 \\ \beta_3 & \beta_2 & \beta_1 & \beta_0 \end{bmatrix} * \begin{bmatrix} \mathbf{P}_0 \\ \mathbf{P}_1 \\ \mathbf{P}_2 \\ \mathbf{P}_3 \end{bmatrix},$$

where

in the mapping relationship, elements included in the first row in a mapping matrix formed by weighting coefficients corresponding to logical lanes in each logical lane group are the same as elements included in the second row, that is, both numerical values and phases of the elements are the same, and a sequence in which the elements included in the first row are arranged is reverse to a sequence in which the elements included in the second row are arranged.

It should be noted that, when the network device provided in this embodiment of the present invention performs coordinated multipoint transmission/reception with a coordinating network device, because a quantity of physical lanes of the coordinating network device is greater than a quantity of preconfigured logical lanes, mapping may be performed between the physical lanes of the coordinating network device and the preconfigured logical lanes by using a traditional mapping scheme described in the background, so as to transmit, by using a physical lane of the coordinating network device, a signal configured on a preconfigured logical lane.

Based on the same invention concept, an embodiment of the present invention further provides a data transmission method. As shown in FIG. 2, the method includes the following steps.

S21: A network device divides N preconfigured logical lanes into M logical lane groups according to a preset mapping relationship between a logical lane and a physical lane, and maps each of the logical lane groups to a different physical lane of the network device, where both M and N are positive integers, M is less than N, and M is a quantity of physical lanes of the network device.

In this step, the preconfigured logical lanes are first divided into the M logical lane groups, where logical lanes included in each logical lane group are all different; then, each of the logical lane groups is mapped to a different physical lane of the network device, where each logical lane group can be mapped to only one physical lane.

S22: The network device transmits, to a receiving device by using each of the physical lanes of the network device, a signal configured on each logical lane in a logical lane group corresponding to each of the physical lanes.

In this embodiment of the present invention, a network device divides N preconfigured logical lanes into M logical lane groups according to a preset mapping relationship between a logical lane and a physical lane, and maps each of the logical lane groups to a different physical lane of the network device, where both M and N are positive integers, M is less than N, and M is a quantity of physical lanes of the network device; and the network device transmits, to a receiving device by using the physical lanes of the network device, a signal configured on each logical lane in a logical lane group corresponding to each of the physical lanes. In this way, the network device can support logical lanes whose quantity is greater than the quantity of the physical lanes of the network device.

The foregoing method may be executed by a macro base station, a micro base station, a pico base station, a home NodeB (which is also referred to as a femto base station), an RRU, or the like.

This embodiment of the present invention is especially applicable to an application scenario in which the network device and another network device simultaneously have communication connections to the receiving device, and a quantity of physical lanes of the another network device is greater than the quantity of the physical lanes of the network device.

Based on the preferable application scenario of this embodiment of the present invention, when coordinated multipoint transmission/reception is performed between network devices having different quantities of physical lanes, a network device having a small quantity of physical lanes can support logical lanes whose quantity is greater than the quantity of the physical lanes of the network device, so that an MIMO mode is no longer restricted by the network device having the small quantity of physical lanes, and identifiable logical lanes of a network device having a large quantity of physical lanes are also not restricted. In this way, when roaming to the network device (for example, a macro base station) having the large quantity of physical lanes, a user can benefit from gains brought by a high order MIMO mode; when roaming to the network device (for example, a micro base station) having the small quantity of physical lanes, the user can be adaptive or can be restricted to a low order MIMO mode by using RRC signaling, which therefore improves user experience.

During implementation, in the preset mapping relationship between a logical lane and a physical lane, a manner for grouping the preconfigured logical lanes is not limited in this embodiment of the present invention, and the preconfigured logical lanes may be grouped in any grouping manner.

Further, in the preset mapping relationship between a logical lane and a physical lane, a mapping between a physical lane and a logical lane group is not limited in this embodiment of the present invention, as long as it is ensured that different logical lane groups are mapped to different physical lanes.

In order to ensure that the physical lanes of the network device have equal air-interface power, preferably, in step S21, the dividing, by a network device, N preconfigured logical lanes into M logical lane groups according to a preset mapping relationship between a logical lane and a physical lane specifically includes:

evenly dividing, by the network device, the N preconfigured logical lanes into the M logical lane groups according to the preset mapping relationship between a logical lane and a physical lane, so that quantities of logical lanes mapped to each physical lane of the network device are equal, which therefore ensures air-interface power balance between the physical lanes.

Based on any one of the foregoing embodiments, the mapping relationship provided in this embodiment of the present invention is shown in the formula 1.

Based on the formula 1, specifically, the network device evenly divides the N preconfigured logical lanes into the M logical lane groups according to a mapping matrix in the foregoing mapping relationship, and maps each of the logical lane groups to a different physical lane of the network device according to a weighting coefficient corresponding to each logical lane.

Further, in order that the physical lanes have equal air-interface power, in the foregoing mapping relationship, weighting coefficients corresponding to logical lanes included in each logical lane group should satisfy at least one of the following conditions:

first, norms of weighting coefficients corresponding to logical lanes included in a same logical lane group are equal; and

second, quadratic sums of norms of weighting coefficients corresponding to logical lanes included in any two different logical lane groups are equal.

Preferably, in the preset mapping relationship between a logical lane and a physical lane, norms of weighting coefficients corresponding to logical lanes included in a same logical lane group are equal, and quadratic sums of norms of weighting coefficients corresponding to logical lanes included in any two different logical lane groups are equal.

In order to normalize a power spectrum density of each physical lane of the network device, preferably, in the preset mapping relationship between a logical lane and a physical lane, norms of weighting coefficients corresponding to logical lanes included in a same logical lane group are equal, and quadratic sums of norms of weighting coefficients corresponding to logical lanes included in any two different logical lane groups are equal to 1.

When mapping is performed, according to preset weighting coefficients, each logical lane group is mapped to a different physical lane of the network device, and phases of weighting coefficients corresponding to logical lanes in each logical lane group may be the same, or may be different. Further, the phases of the weighting coefficients corresponding to the logical lanes in each logical lane group may be set with reference to another algorithm, for example, a PAR reduction algorithm.

Based on any one of the foregoing embodiments, in the preset mapping relationship between a logical lane and a physical lane, weighting coefficients corresponding to logical lanes that are located at same locations in different logical lane groups may be the same, or may be different.

Preferably, in the preset mapping relationship between a logical lane and a physical lane, weighting coefficients corresponding to logical lanes that are located at same locations in different logical lane groups are the same, so that downlink transmit power of each physical lane of the network device is more uniform.

Specifically, in the preset mapping relationship between a logical lane and a physical lane, that weighting coefficients corresponding to logical lanes are the same refers to that both numerical values and phases of the weighting coefficients are the same, and that weighting coefficients corresponding to logical lanes are different refers to that numerical values of the weighting coefficients are different and/or phases of the weighting coefficients are different.

Based on any one of the foregoing embodiments, if M=2, in the mapping matrix in the formula 1, elements in the first row are the same as elements in the second row, and a sequence in which the elements in the first row are arranged is reverse to a sequence in which the elements in the second row are arranged.

Specifically, elements corresponding to logical lanes in a first logical lane group among the elements in the first row in the mapping matrix are respectively weighting coefficients corresponding to the logical lanes in the logical lane group, and values of the other elements among the elements in the first row are 0; elements corresponding to logical lanes in a second logical lane group among the elements in the second row are respectively weighting coefficients corresponding to the logical lanes in the logical lane group, and values of the other elements among the elements in the second row are 0.

It should be noted that, based on a coordinated multipoint operation mode of the network device and another network device, because a quantity of physical lanes of the another network device is greater than a quantity of preconfigured logical lanes, mapping may be performed between the physical lanes of the another network device and the preconfigured logical lanes by using a traditional mapping scheme described in the background, so as to transmit, by using a physical lane of the another network device, a signal configured on a preconfigured logical lane.

With reference to the following four specific embodiments, when the data transmission method provided in this embodiment of the present invention is applied in the coordinated multipoint operation mode, a mapping relationship used by a network device having a small quantity of physical lanes is described below in detail.

Embodiment 1 of the present invention: When an 8-lane network element (or a 4-lane network element or a 2-lane network element) coordinates with a 1-lane network element, a CRS configured in engineering parameters in network planning has 2 logical lanes; therefore, the 1-lane network element may map the logical lanes that are configured in the engineering parameters in network planning to a physical lane of the 1-lane network element by using the following mapping scheme:

$$\left[\mathbf{P}^0\right] = \begin{bmatrix} \beta_0 & \beta_1 \end{bmatrix} * \begin{bmatrix} \mathbf{P}_0 \\ \mathbf{P}_1 \end{bmatrix}, \text{ and } \left|\beta_0\right| = \left|\beta_1\right|$$

is satisfied.

Further, in order to normalize a power spectrum density of each physical lane of a network device, $|\beta_0|^2 + |\beta_1|^2 = 1$.

In this mapping scheme, because a quantity of physical lanes of the 1-lane network element is 1, the 2 preconfigured logical lanes are added to one group, and according to set weighting coefficients, the 2 logical lanes are mapped to the 1 physical lane.

In this mapping scheme, preferably, values of weighting coefficients in the mapping matrix may be

$$\beta_0 = \beta_1 = \frac{\sqrt{2}}{2} \text{ or } \beta_0 = -\beta_1 = \frac{\sqrt{2}}{2}$$

Certainly, the weighting coefficients in this mapping scheme may also be other values, as long as it is satisfied that norms of weighting coefficients corresponding to logical lanes included in each logical lane group are equal, and that quadratic sums of norms of weighting coefficients corresponding to logical lanes included in any two different logical lane groups are equal.

In this embodiment, for the 8-lane network element, because the quantity of the preconfigured logical lanes is less than a quantity of physical lanes of the 8-lane network element, the 8-lane network element may perform mapping in a traditional mapping manner.

Embodiment 2 of the present invention: When an 8-lane network element (or a 4-lane network element) coordinates with a 1-lane network element, a CRS configured in engineering parameters in network planning has 4 logical lanes; therefore, the 1-lane network element may map the logical lanes that are configured in the engineering parameters in network planning to a physical lane of the 1-lane network element by using the following mapping scheme:

$$\left[\mathbf{P}^0\right] = \begin{bmatrix} \beta_0 & \beta_1 & \beta_2 & \beta_3 \end{bmatrix} * \begin{bmatrix} \mathbf{P}_0 \\ \mathbf{P}_1 \\ \mathbf{P}_2 \\ \mathbf{P}_3 \end{bmatrix}, \text{ and } \left|\beta_0\right| = \left|\beta_1\right| = \left|\beta_2\right| = \left|\beta_3\right|$$

is satisfied.

Further, in order to normalize a power spectrum density of each physical lane of a network device, $|\beta_0|^2 + |\beta_1|^2 + |\beta_2|^2 + |\beta_3|^2 = 1$.

In this mapping scheme, because a quantity of physical lanes of the 1-lane network element is 1, the 4 preconfigured logical lanes are added to one group, and according to set weighting coefficients, the 4 logical lanes are mapped to the 1 physical lane.

In this mapping scheme, preferably, values of weighting coefficients in the mapping matrix may be

$$\beta_0 = \beta_1 = \beta_2 = \beta_3 = \frac{1}{2} \text{ or } \beta_0 = -i\beta_1 = -\beta_2 = i\beta_3 = \frac{1}{2}$$

Certainly, the weighting coefficients in this mapping scheme may also be other values, as long as it is satisfied that norms of weighting coefficients corresponding to logical lanes included in each logical lane group are equal, and that quadratic sums of norms of weighting coefficients corresponding to logical lanes included in any two different logical lane groups are equal.

In this embodiment, for the 8-lane network element, because the quantity of the preconfigured logical lanes is less than a quantity of physical lanes of the 8-lane network element, the 8-lane network element may perform mapping in a traditional mapping manner.

Embodiment 3 of the present invention: When an 8-lane network element (or a 4-lane network element) coordinates with a 2-lane network element, a CRS configured in engineering parameters in network planning has 4 logical lanes; therefore, the 2-lane network element may map the logical lanes that are configured in the engineering parameters in network planning to physical lanes of the 2-lane network element by using the following mapping scheme:

$$\begin{bmatrix} \mathbf{P}^0 \\ \mathbf{P}^1 \end{bmatrix} = \begin{bmatrix} \beta_0 & \beta_1 & \beta_2 & \beta_3 \\ \beta_3 & \beta_2 & \beta_1 & \beta_0 \end{bmatrix} * \begin{bmatrix} \mathbf{P}_0 \\ \mathbf{P}_1 \\ \mathbf{P}_2 \\ \mathbf{P}_3 \end{bmatrix},$$

where

in this mapping scheme, the 4 logical lanes are divided into two groups, each logical lane group includes 2 different logical lanes, for example, $p_0$ and $p_1$ are added to one group and $p_2$ and $p_3$ are added to one group, or $p_0$ and $p_2$ are added to one group and $p_1$, and $p_3$ are added to one group, or $p_0$ and $p_3$ are added to one group and $p_1$ and $p_2$ are added to one group; no matter how grouping is performed, weighting coefficients corresponding to logical lanes in each logical lane group all need to satisfy that: norms of weighting coefficients corresponding to logical lanes in each logical lane group are equal, and quadratic sums of the norms of the weighting coefficients corresponding to the logical lanes in each logical lane group are equal.

Further, in order to normalize a power spectrum density of each physical lane of a network device, norms of weighting coefficients corresponding to logical lanes in each logical lane group are equal, and quadratic sums of norms of weighting coefficients corresponding to logical lanes in each logical lane group are equal to 1.

For example, using an example in which $p_0$ and $p_1$ are added to a first group and $p_2$ and $p_3$ are added to a second group, for the first logical lane group, weighting coefficients thereof should satisfy that $|\beta_0|=|\beta_1|$ and $\beta_2=\beta_3=0$ for the second logical lane group, weighting coefficients thereof should satisfy that $|\beta_2|=|\beta_3|$ and $\beta_0=\beta_1=0$, where $|\beta_0|^2+|\beta_1|^2=|\beta_2|^2+|\beta_3|^2$.

In this mapping scheme, preferably, values of weighting coefficients in the mapping matrix may be

$\beta_0 = \beta_1 = \dfrac{\sqrt{2}}{2}$ and $\beta_2=\beta_3=0$, or $\beta_0 = \beta_2 = \dfrac{\sqrt{2}}{2}$ and $\beta_1=\beta_3=0$. Certainly, the weighting coefficients in this mapping scheme may also be other values, as long as it is satisfied that norms of weighting coefficients corresponding to logical lanes included in each logical lane group are equal, and that quadratic sums of norms of weighting coefficients corresponding to logical lanes included in any two different logical lane groups are equal.

In this embodiment, for the 8-lane network element, because the quantity of the preconfigured logical lanes is less than a quantity of physical lanes of the 8-lane network element, the 8-lane network element may perform mapping in a traditional mapping manner.

Embodiment 4 of the present invention: When an 8-lane network element performs traffic beam coordination (TM9 CoMP) with a 4-lane network element, a 2-lane network element, and a 1-lane network element separately, CSI configured in engineering parameters in network planning has 8 logical lanes.

Therefore, the 1-lane network element may map the logical lanes that are configured in engineering parameters in network planning to a physical lane of the 1-lane network element by using the following mapping scheme:

$$\begin{bmatrix} \mathbf{P}^0 \end{bmatrix} = \begin{bmatrix} \beta_0 & \beta_1 & \beta_2 & \beta_3 & \beta_4 & \beta_5 & \beta_6 & \beta_7 \end{bmatrix} * \begin{bmatrix} \mathbf{P}_0 \\ \mathbf{P}_1 \\ \mathbf{P}_2 \\ \mathbf{P}_3 \\ \mathbf{P}_4 \\ \mathbf{P}_5 \\ \mathbf{P}_6 \\ \mathbf{P}_7 \end{bmatrix},$$

where
weighting coefficients in the mapping matrix should satisfy: $|\beta_0|=|\beta_1|=|\beta_2|=|\beta_3|=|\beta_4|=|\beta_5|=|\beta_6|=|\beta_7|$.

Further, in order to normalize a power spectrum density of each physical lane of a network device, $|\beta_0|^2+|\beta_1|^2+|\beta_2|^2+|\beta_3|^2+|\beta_4|^2+|\beta_5|^2+|\beta_5|^2+|\beta_6|^2|\beta_7|^2=1$.

In the mapping scheme of the 1-lane network element, preferably, values of the weighting coefficients in the mapping matrix may be $\beta_0 = \beta_1 = \beta_2 = \beta_3 = \beta_4 = \beta_5 = \beta_6 = \beta_7 = \dfrac{1}{2\sqrt{2}}$ or

$\beta_0 = \beta_1 * e^{-i\frac{2\pi}{8}} = \beta_2 * e^{-i\frac{4\pi}{8}} = \beta_3 * e^{-i\frac{6\pi}{8}} = \beta_4 * e^{-i\frac{8\pi}{8}} = \beta_5 * e^{-i\frac{10\pi}{8}} = \beta_6 * e^{-i\frac{12\pi}{8}} = \beta_7 * e^{-i\frac{14\pi}{8}} = \dfrac{1}{2\sqrt{2}}$.

Certainly, the weighting coefficients in this mapping scheme may also be other values, as long as it is satisfied that norms of weighting coefficients corresponding to logical lanes included in each logical lane group are equal, and that quadratic sums of norms of weighting coefficients corresponding to logical lanes included in any two different logical lane groups are equal.

The 2-lane network element may map the logical lanes that are configured in engineering parameters in network planning to physical lanes of the 2-lane network element by using the following mapping scheme:

$$\begin{bmatrix} \mathbf{P}^0 \\ \mathbf{P}^1 \end{bmatrix} = \begin{bmatrix} \beta_0 & \beta_1 & \beta_2 & \beta_3 & \beta_4 & \beta_5 & \beta_6 & \beta_7 \\ \beta_7 & \beta_6 & \beta_5 & \beta_4 & \beta_3 & \beta_2 & \beta_1 & \beta_0 \end{bmatrix} * \begin{bmatrix} \mathbf{P}_0 \\ \mathbf{P}_1 \\ \mathbf{P}_2 \\ \mathbf{P}_3 \\ \mathbf{P}_4 \\ \mathbf{P}_5 \\ \mathbf{P}_6 \\ \mathbf{P}_7 \end{bmatrix},$$

where
in the foregoing mapping scheme of the 2-lane network element, 8 logical lanes that are configured in engineering parameters in network planning need to be divided into two groups, each group includes 4 different logical lanes, and a grouping manner is not limited in this embodiment; however, no matter how grouping is performed, weighting coefficients corresponding to logical lanes in each logical lane group all need to satisfy that: norms of the weighting coefficients corresponding to the logical lanes in the logical lane group are equal, and quadratic sums of the norms of the weighting coefficients corresponding to the logical lanes in the logical lane group are equal.

Further, in order to normalize a power spectrum density of each physical lane of a network device, norms of weighting coefficients corresponding to logical lanes in each logical lane group are equal, and quadratic sums of norms of weighting coefficients corresponding to logical lanes in each logical lane group are equal to 1.

In the mapping scheme of the 2-lane network element, preferably, values of weighting coefficients in the mapping matrix may be $\beta_0 = \beta_1 = \beta_2 = \beta_3 = \dfrac{1}{2}$, $\beta_4=\beta_5=\beta_6=\beta_7=0$ or

$\beta_0 = \beta_2 = \beta_4 = \beta_6 = \dfrac{1}{2}$, $\beta_1=\beta_3=\beta_5=\beta_7=0$ or

$\beta_0 = \beta_1 = \beta_4 = \beta_5 = \dfrac{1}{2}$, $\beta_2=\beta_3=\beta_6=\beta_7=0$. Certainly, the weighting coefficients in this mapping scheme may also be other values, as long as it is satisfied that norms of weighting coefficients corresponding to logical lanes included in each logical lane group are equal, and that quadratic sums of norms of weighting coefficients corresponding to logical lanes included in any two different logical lane groups are equal.

The 4-lane network element may map the logical lanes that are configured in engineering parameters in network planning to physical lanes of the 4-lane network element by using the following mapping scheme:

$$
\begin{bmatrix} P^0 \\ P^1 \\ P^2 \\ P^3 \end{bmatrix} =
\begin{bmatrix} \alpha & \beta & 0 & 0 & 0 & 0 & 0 & 0 \\ 0 & 0 & \alpha & \beta & 0 & 0 & 0 & 0 \\ 0 & 0 & 0 & 0 & \alpha & \beta & 0 & 0 \\ 0 & 0 & 0 & 0 & 0 & 0 & \alpha & \beta \end{bmatrix} *
\begin{bmatrix} P_0 \\ P_1 \\ P_2 \\ P_3 \\ P_4 \\ P_5 \\ P_6 \\ P_7 \end{bmatrix}
$$

or

$$
\begin{bmatrix} P^0 \\ P^1 \\ P^2 \\ P^3 \end{bmatrix} =
\begin{bmatrix} \alpha & 0 & \beta & 0 & 0 & 0 & 0 & 0 \\ 0 & \alpha & 0 & \beta & 0 & 0 & 0 & 0 \\ 0 & 0 & 0 & 0 & \alpha & 0 & \beta & 0 \\ 0 & 0 & 0 & 0 & 0 & \alpha & 0 & \beta \end{bmatrix} *
\begin{bmatrix} P_0 \\ P_1 \\ P_2 \\ P_3 \\ P_4 \\ P_5 \\ P_6 \\ P_7 \end{bmatrix}
$$

or

$$\begin{bmatrix} \mathbf{P}^0 \\ \mathbf{P}^1 \\ \mathbf{P}^2 \\ \mathbf{P}^3 \end{bmatrix} = \begin{bmatrix} \alpha & 0 & 0 & 0 & \beta & 0 & 0 & 0 \\ 0 & \alpha & 0 & 0 & 0 & \beta & 0 & 0 \\ 0 & 0 & \alpha & 0 & 0 & 0 & \beta & 0 \\ 0 & 0 & 0 & \alpha & 0 & 0 & 0 & \beta \end{bmatrix} * \begin{bmatrix} \mathbf{P}_0 \\ \mathbf{P}_1 \\ \mathbf{P}_2 \\ \mathbf{P}_3 \\ \mathbf{P}_4 \\ \mathbf{P}_5 \\ \mathbf{P}_6 \\ \mathbf{P}_7 \end{bmatrix},$$

in the foregoing mapping scheme of the 4-lane network element, 8 logical lanes that are configured in engineering parameters in network planning need to be divided into four groups, each logical lane group includes 2 different logical lanes, and a grouping manner is not limited in this embodiment; however, no matter how grouping is performed, weighting coefficients corresponding to logical lanes in each logical lane group all need to satisfy that: norms of the weighting coefficients corresponding to the logical lanes in the logical lane group are equal, and quadratic sums of the norms of the weighting coefficients corresponding to the logical lanes in the logical lane group are equal.

Further, in order to normalize a power spectrum density of each physical lane of a network device, norms of weighting coefficients corresponding to logical lanes in each logical lane group are equal, and quadratic sums of norms of weighting coefficients corresponding to logical lanes in each logical lane group are equal to 1.

In the mapping scheme of the 4-lane network element, values of weighting coefficients in the mapping matrix may be:

$$\alpha = \beta = \frac{\sqrt{2}}{2} \text{ or } \alpha = -\beta = \frac{\sqrt{2}}{2}$$ Certainly, the weighting coefficients in this mapping scheme may also be other values, as long as it is satisfied that norms of weighting coefficients corresponding to logical lanes included in each logical lane group are equal, and that quadratic sums of norms of weighting coefficients corresponding to logical lanes included in any two different logical lane groups are equal.

The foregoing method processing procedure may be implemented by using a software program, the software program may be stored in a storage medium, and when the stored software program is invoked, the steps of the foregoing method are performed.

Based on the same invention concept, an embodiment of the present invention further provides a data transmission device, and the data transmission device may be the network device in the foregoing method embodiment. The data transmission device has M physical lanes, and as shown in FIG. 3, the data transmission device includes:

a processing module 31, configured to divide N preconfigured logical lanes into M logical lane groups according to a preset mapping relationship between a logical lane and a physical lane, and map each of the logical lane groups to a different physical lane of the data transmission device, where both M and N are positive integers, M is less than N, and M is a quantity of physical lanes of the data transmission device; and

a transmission module 32, configured to transmit, to a receiving device by using each of the physical lanes of the data transmission device, a signal configured on each logical lane in a logical lane group corresponding to each of the physical lanes.

When the data transmission device provided in this embodiment of the present invention transmits data to the receiving device, the data transmission device can support logical lanes whose quantity is greater than the quantity of the physical lanes of the data transmission device.

The data transmission device in this embodiment of the present invention is applicable to an application scenario in which the data transmission device and a coordinating network device simultaneously provide services for the receiving device, and a quantity of physical lanes of the coordinating network device is greater than the quantity of the physical lanes of the data transmission device provided in this embodiment of the present invention.

Based on the foregoing application scenario, when the data transmission device provided in this embodiment of the present invention performs coordinated multipoint transmission/reception with a coordinating network device, the data transmission device provided in this embodiment of the present invention can support logical lanes whose quantity is greater than a quantity of physical lanes of the data transmission device, so that an MIMO mode is no longer restricted by a network device that has a small quantity of physical lanes, and identifiable logical lanes of a network device that has a large quantity of physical lanes are also not restricted. In this way, when roaming to the coordinating network device (for example, a macro base station), a user can benefit from gains brought by a high order MIMO mode; when roaming to the data transmission device (for example, a micro base station) provided in this embodiment of the present invention, the user can also be adaptive or can be restricted to a low order MIMO mode by using radio resource control (Radio Resource Control, RRC) signaling, which therefore improves user experience.

Preferably, the processing module 31 is specifically configured to evenly divide the N preconfigured logical lanes into the M logical lane groups according to the preset mapping relationship between a logical lane and a physical lane.

Based on any one of the foregoing embodiments, the mapping relationship provided in this embodiment of the present invention is shown in the formula 1.

Based on the formula 1, specifically, the processing module 31 evenly divides the N preconfigured logical lanes into the M logical lane groups according to a mapping matrix in the foregoing mapping relationship, and maps each of the logical lane groups to a different physical lane of the data transmission device according to a weighting coefficient corresponding to each logical lane.

Further, in order that the physical lanes have equal air-interface power, in the foregoing mapping relationship, weighting coefficients corresponding to logical lanes included in each logical lane group should satisfy at least one of the following conditions:

first, norms of weighting coefficients corresponding to logical lanes included in a same logical lane group are equal; and

second, quadratic sums of norms of weighting coefficients corresponding to logical lanes included in any two different logical lane groups are equal.

In order to normalize a power spectrum density of each physical lane of the data transmission device, preferably, in the preset mapping relationship between a logical lane and a physical lane, norms of weighting coefficients corresponding to logical lanes included in a same logical lane group are equal, and quadratic sums of norms of weighting coefficients corresponding to logical lanes included in any two different logical lane groups are equal to 1.

When mapping is performed, according to preset weighting coefficients, each logical lane group is mapped to a different physical lane of the data transmission device, and phases of weighting coefficients corresponding to logical lanes in each logical lane group may be the same, or may be different. Further, the phases of the weighting coefficients corresponding to the logical lanes in each logical lane group may be set with reference to another algorithm, for example, a PAR reduction algorithm.

Based on any one of the foregoing embodiments, in the preset mapping relationship between a logical lane and a physical lane, weighting coefficients corresponding to logical lanes that are located at same locations in different logical lane groups may be the same, or may be different.

Preferably, in the preset mapping relationship between a logical lane and a physical lane, weighting coefficients corresponding to logical lanes that are located at same locations in different logical lane groups are the same, so that downlink transmit power of each physical lane of the data transmission device is more uniform.

Based on any one of the foregoing embodiments, if M=2, in the mapping matrix in the formula 1, elements in the first row are the same as elements in the second row, and a sequence in which the elements in the first row are arranged is reverse to a sequence in which the elements in the second row are arranged.

Specifically, elements corresponding to logical lanes in a first logical lane group among the elements in the first row in the mapping matrix are respectively weighting coefficients corresponding to the logical lanes in the logical lane group, and values of the other elements among the elements in the first row are 0; elements corresponding to logical lanes in a second logical lane group among the elements in the second row are respectively weighting coefficients corresponding to the logical lanes in the logical lane group, and values of the other elements among the elements in the second row are 0.

It should be noted that, based on a coordinated multipoint operation mode of the data transmission device provided in this embodiment of the present invention and another network device, because a quantity of physical lanes of the another network device is greater than a quantity of preconfigured logical lanes, mapping may be performed between the physical lanes of the another network device and the preconfigured logical lanes by using a traditional mapping scheme described in the background, so as to transmit, by using a physical lane of the another network device, a signal configured on a preconfigured logical lane.

For a specific implementation process of the data transmission device provided in this embodiment of the present invention, reference may be made to a related method part, and details are not described herein again.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may also be stored in a computer readable memory that can instruct the computer or another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the present invention without departing from the scope of the present invention. The present invention is intended to cover these modifications and variations provided that they fall within the scope of protection defined by the following claims and their equivalent technologies.

**Claims**

1. A data transmission device for coordinated multipoint, CoMP, transmission, wherein the data transmission device is **characterized in** comprising:

   a processing module (31), configured to divide N preconfigured logical lanes into M logical lane groups according to a preset mapping relationship between a logical lane and a physical lane, and map each of the logical lane groups to a different physical lane of the data transmission device, wherein both M and N are positive integers, M is less than N, and M is a quantity of physical lanes of the data transmission device; and
   a transmission module (32), configured to transmit, to a receiving device by using each of the physical lanes, a signal configured on each logical lane in a logical lane group corresponding to each of the physical lanes.

2. The data transmission device according to claim 1, wherein the processing module is specifically configured to:

   evenly divide the N preconfigured logical lanes into the M logical lane groups according to the mapping relationship.

3. The data transmission device according to claim 2, wherein the processing module evenly divides the N preconfigured logical lanes into the M logical lane groups according to the following mapping relationship, and maps each of the logical lane groups to a different physical lane of the data transmission device:

$$\begin{bmatrix} P^0 \\ \vdots \\ P^{M-1} \end{bmatrix} = \begin{bmatrix} b_0^0 & \cdots & b_{N-1}^0 \\ \vdots & \ddots & \vdots \\ b_0^{M-1} & \cdots & b_{N-1}^{M-1} \end{bmatrix} * \begin{bmatrix} P_0 \\ \vdots \\ P_{N-1} \end{bmatrix},$$

wherein

$P_n$ represents a port number of a logical lane, wherein $n = 0, \cdots, N$-1, and $N$ is a quantity of logical lanes; $P^m$ represents a port number of a physical lane, wherein $m = 0, \cdots, M$-1, $N = A*M$, and $A$ is a positive integer greater

than 1; and $\begin{bmatrix} b_0^0 & \cdots & b_{N-1}^0 \\ \vdots & \ddots & \vdots \\ b_0^{M-1} & \cdots & b_{N-1}^{M-1} \end{bmatrix}$ is a mapping matrix, wherein each row of the mapping matrix comprises

$A$ non-zero elements, locations of non-zero elements comprised in different rows in the mapping matrix are all different, and the non-zero elements comprised in each row of the mapping matrix are weighting coefficients corresponding to logical lanes comprised in a logical lane group corresponding to the row.

**4.** The data transmission device according to claim 3, wherein norms of weighting coefficients corresponding to logical lanes comprised in a same logical lane group are equal.

**5.** The data transmission device according to claim 3 or 4, wherein quadratic sums of norms of weighting coefficients corresponding to logical lanes comprised in any two different logical lane groups are equal.

**6.** The data transmission device according to any one of claims 3 to 5, wherein in the mapping relationship, logical lanes that are located at same locations in different logical lane groups have a same weighting coefficient.

**7.** A data transmission method for performing a coordinated multipoint, CoMP, transmission, wherein the method is **characterized by** the steps of:

dividing (S21), by a data transmission device, N preconfigured logical lanes into M logical lane groups according to a preset mapping relationship between a logical lane and a physical lane, and mapping each of the logical lane groups to a different physical lane of the network device, wherein both M and N are positive integers, M is less than N, and M is a quantity of physical lanes of the network device; and
transmitting (S22), by the data transmission device, to a receiving device by using each of the physical lanes, a signal configured on each logical lane in a logical lane group corresponding to each of the physical lanes.

**8.** The method according to claim 7, wherein the dividing, by a network device, N preconfigured logical lanes into M logical lane groups according to the mapping relationship specifically comprises:

evenly dividing, by the network device, the N preconfigured logical lanes into the M logical lane groups according to the mapping relationship.

**9.** The method according to claim 8, wherein the network device evenly divides the N preconfigured logical lanes into the M logical lane groups according to the following mapping relationship, and maps each of the logical lane groups to a different physical lane of the network device:

$$\begin{bmatrix} \mathbf{P}^0 \\ \vdots \\ \mathbf{P}^{M-1} \end{bmatrix} = \begin{bmatrix} b_0^0 & \cdots & b_{N-1}^0 \\ \vdots & \ddots & \vdots \\ b_0^{M-1} & \cdots & b_{N-1}^{M-1} \end{bmatrix} * \begin{bmatrix} \mathbf{P}_0 \\ \vdots \\ \mathbf{P}_{N-1} \end{bmatrix},$$

wherein

$\mathbf{P}_n$ represents a port number of a logical lane, wherein $n = 0,\cdots,N$-1, and $N$ is a quantity of logical lanes; $\mathbf{P}^m$ represents a port number of a physical lane, wherein $m = 0,\cdots,M$-1, $N = A*M$, and $A$ is a positive integer greater

than 1; and $\begin{bmatrix} b_0^0 & \cdots & b_{N-1}^0 \\ \vdots & \ddots & \vdots \\ b_0^{M-1} & \cdots & b_{N-1}^{M-1} \end{bmatrix}$ is a mapping matrix, wherein each row of the mapping matrix comprises

$A$ non-zero elements, locations of non-zero elements comprised in different rows in the mapping matrix are all different, and the non-zero elements comprised in each row of the mapping matrix are weighting coefficients corresponding to logical lanes comprised in a logical lane group corresponding to the row.

10. The method according to claim 9, wherein norms of weighting coefficients corresponding to logical lanes comprised in a same logical lane group are equal.

11. The method according to claim 9 or 10, wherein quadratic sums of norms of weighting coefficients corresponding to logical lanes comprised in any two different logical lane groups are equal.

12. The method according to any one of claims 9 to 11, wherein in the mapping relationship, logical lanes that are located at same locations in different logical lane groups have a same weighting coefficient.


**Patentansprüche**

1. Datenübertragungsvorrichtung für koordinierte Mehrpunkt- Übertragung (CoMP), wobei die Datenübertragungsvorrichtung **dadurch gekennzeichnet ist, dass** sie umfasst:

ein Verarbeitungsmodul (31), das zum Unterteilen von N vorbestimmten logischen Spuren in M logische Spurengruppen gemäß einer voreingestellten Abbildungsbeziehung zwischen einer logischen Spur und einer physischen Spur konfiguriert ist, und zum Abbilden jeder der logischen Spurengruppen auf eine andere physische Spur der Datenübertragungsvorrichtung, wobei sowohl M als auch N positive ganze Zahlen sind, M kleiner als N ist, und M eine Quantität von physischen Spuren der Datenübertragungsvorrichtung ist; und ein Übertragungsmodul (32), das zum Übertragen eines Signals, das auf jeder logischen Spur in einer logischen Spurgruppe, die jeder der physischen Spuren entspricht, ausgelegt ist, an eine Empfangsvorrichtung unter Verwendung jeder der physischen Spuren ausgelegt ist.

2. Die Datenübertragungsvorrichtung nach Anspruch 1, wobei das Verarbeitungsmodul speziell ausgelegt ist zum:

gleichmäßigen Unterteilen der N vorbestimmten logischen Spuren in die M logischen Spurengruppen gemäß der Abbildungsbeziehung.

3. Datenübertragungsvorrichtung nach Anspruch 2, wobei das Verarbeitungsmodul die N vorbestimmten logischen Spuren gleichmäßig in die M logischen Spurengruppen gemäß der folgenden Abbildungsbeziehung unterteilt und jede der logischen Spurengruppen auf eine andere physikalische Spur der Datenübertragungsvorrichtung abbildet:

$$\begin{bmatrix} P^0 \\ \vdots \\ P^{M-1} \end{bmatrix} = \begin{bmatrix} b_0^0 & \cdots & b_{N-1}^0 \\ \vdots & \ddots & \vdots \\ b_0^{M-1} & \cdots & b_{N-1}^{M-1} \end{bmatrix} * \begin{bmatrix} P_0 \\ \vdots \\ P_{N-1} \end{bmatrix}$$

wobei

$P_n$ stellt eine Portnummer einer logischen Spur dar, wobei $n = 0,...,N$-1 und $N$ eine Quantität logischer Spuren ist; $P^m$ stellt eine Portnummer einer physischen Spur dar, wobei

$$m = 0,...,M-1$$

$N = A*M$, und $A$ ist eine positive ganze Zahl größer als 1; und $\begin{bmatrix} b_0^0 & \cdots & b_{N-1}^0 \\ \vdots & \ddots & \vdots \\ b_0^{M-1} & \cdots & b_{N-1}^{M-1} \end{bmatrix}$ eine Abbildungsmatrix

ist, wobei jede Zeile der Abbildungsmatrix $A$ Nicht-Null-Elemente umfasst, Positionen von Nicht-Null-Elementen, die in verschiedenen Zeilen in der Abbildungsmatrix enthalten sind, alle unterschiedlich sind, und die Nicht-Null-Elemente, die in jeder Zeile der Abbildungsmatrix enthalten sind, Gewichtungskoeffizienten sind, die logischen Spuren entsprechen, die in einer der Zeile entsprechenden logischen Spurengruppe enthalten sind.

4. Datenübertragungsvorrichtung nach Anspruch 3, wobei Normen von Gewichtungskoeffizienten, die logischen Spuren entsprechen, die in einer gleichen logischen Spurengruppe enthalten sind, gleich sind.

5. Datenübertragungsvorrichtung nach Anspruch 3 oder 4, wobei quadratische Summen von Normen von Gewichtungskoeffizienten, die logischen Spuren entsprechen, die in zwei verschiedenen logischen Spurengruppen enthalten sind, gleich sind.

6. Datenübertragungsvorrichtung nach einem der Ansprüche 3 bis 5, wobei in der Abbildungsbeziehung logische Spuren, die sich an gleichen Stellen in verschiedenen logischen Spurengruppen befinden, einen gleichen Gewichtungskoeffizienten aufweisen.

7. Datenübertragungsverfahren zum Durchführen einer koordinierten Mehrpunkt-Übertragung (CoMP), wobei das Verfahren durch die folgenden Schritte gekennzeichnet ist:

Unterteilen (S21) von N vorbestimmten logischen Spuren durch eine Datenübertragungsvorrichtung in M logische Spurengruppen gemäß einer voreingestellten Abbildungsbeziehung zwischen einer logischen Spur und einer physischen Spur und Abbilden jeder der logischen Spurengruppen auf eine andere physische Spur der Netzwerkkomponente, wobei sowohl M als auch N positive ganze Zahlen sind, M kleiner als N ist und M eine Quantität von physischen Spuren der Netzwerkkomponente ist; und
Übertragen (S22) eines Signals, das auf jeder logischen Spur in einer logischen Spurgruppe, die jeder der physischen Spuren entspricht, durch die Datenübertragungsvorrichtung an eine Empfangsvorrichtung unter Verwendung jeder der physikalischen Spuren ausgelegt ist.

8. Verfahren nach Anspruch 7, wobei das Unterteilen von N vorbestimmten logischen Spuren in M logische Spurengruppen durch eine Netzwerkvorrichtung gemäß der Abbildungsbeziehung spezifisch umfasst:

gleichmäßiges Unterteilen der N vorbestimmten logischen Spuren durch die Netzwerkvorrichtung in die M logischen Spurengruppen gemäß der Abbildungsbeziehung.

9. Verfahren nach Anspruch 8, wobei die Netzwerkvorrichtung die N vorbestimmten logischen Spuren gleichmäßig in die M logischen Spurengruppen gemäß der folgenden Abbildungsbeziehung unterteilt und jede der logischen Spurengruppen auf eine andere physische Spur der Netzwerkvorrichtung abbildet:

$$\begin{bmatrix} P^0 \\ \vdots \\ P^{M-1} \end{bmatrix} = \begin{bmatrix} b_0^0 & \cdots & b_{N-1}^0 \\ \vdots & \ddots & \vdots \\ b_0^{M-1} & \cdots & b_{N-1}^{M-1} \end{bmatrix} * \begin{bmatrix} P_0 \\ \vdots \\ P_{N-1} \end{bmatrix}$$

wobei

$P_n$ stellt eine Portnummer einer logischen Spur dar, wobei $n$ = 0,...,$N$-1 und $N$ eine Quantität logischer Spuren ist, $P^m$ stellt eine Portnummer einer physischen Spur dar, wobei

$$m = 0, \ldots, M - 1$$

$N = A*M$, und $A$ ist eine positive ganze Zahl größer als 1; und $\begin{bmatrix} b_0^0 & \cdots & b_{N-1}^0 \\ \vdots & \ddots & \vdots \\ b_0^{M-1} & \cdots & b_{N-1}^{M-1} \end{bmatrix}$ eine Abbildungsmatrix

ist, wobei jede Zeile der Abbildungsmatrix $A$ Nicht-Null-Elemente umfasst, Positionen von Nicht-Null-Elementen, die in verschiedenen Zeilen in der Abbildungsmatrix umfasst sind, alle unterschiedlich sind, und die Nicht-Null-Elemente, die in jeder Zeile der Abbildungsmatrix umfasst sind, Gewichtungskoeffizienten sind, die logischen Spuren entsprechen, die in einer der Zeile entsprechenden logischen Spurengruppe umfasst sind.

10. Verfahren nach Anspruch 9, wobei Normen der Gewichtungskoeffizienten, die den logischen Spuren entsprechen, die in einer gleichen logischen Spurengruppe enthalten sind, gleich sind.

11. Verfahren nach Anspruch 9 oder 10, wobei quadratische Summen von Normen von Gewichtungskoeffizienten, die logischen Spuren entsprechen, die in zwei verschiedenen logischen Borgruppen umfasst sind, gleich sind.

12. Verfahren nach einem der Ansprüche 9 bis 11, wobei in der Abbildungsbeziehung logische Spuren, die sich an gleichen Stellen in verschiedenen logischen Spurengruppen befinden, einen gleichen Gewichtungskoeffizienten aufweisen.

## Revendications

1. Dispositif de transmission de données destiné à une transmission multipoint coordonnée, CoMP, le dispositif de transmission de données étant **caractérisé en ce qu'**il comprend :

un module de traitement (31), conçu pour diviser N voies logiques préconfigurées en M groupes de voies logiques selon un rapport de mappage prédéfini entre une voie logique et une voie physique, et mapper chacun des groupes de voies logiques sur une ligne physique différente du dispositif de transmission de données, M et N étant tous les deux des nombres entiers positifs, M est inférieur à N, et M est une quantité de voies physiques du dispositif de transmission de données ; et
un module de transmission (32), conçu pour transmettre, à un dispositif de réception à l'aide de chacune des voies physiques, un signal conçu sur chaque voie logique dans un groupe de voies logiques correspondant à chacune des voies physiques.

2. Dispositif de transmission de données selon la revendication 1, dans lequel le module de traitement est conçu spécifiquement pour :

diviser de manière égale les N voies logiques préconfigurées en M groupes de voies logiques selon le rapport de mappage.

3. Dispositif de transmission de données selon la revendication 2, dans lequel le module de traitement divise de manière égale les N voies logiques préconfigurées en M groupes de voies logiques selon le rapport de mappage suivant, et mappe chacun des groupes de voies logiques sur une voie physique différente du dispositif de transmission

de données :

$$
\begin{bmatrix} P^0 \\ \vdots \\ P^{M-1} \end{bmatrix} = \begin{bmatrix} b_0^0 & \cdots & b_{N-1}^0 \\ \vdots & \ddots & \vdots \\ b_0^{M-1} & \cdots & b_{N-1}^{M-1} \end{bmatrix} * \begin{bmatrix} P_0 \\ \vdots \\ P_{N-1} \end{bmatrix},
$$

dans lequel

$P_n$ représente un numéro de port d'une voie logique, dans lequel n = 0, ..., N-1, et N est une quantité de voies logiques ; $P^m$ représente un numéro de port d'une voie physique, dans lequel m = 0,..., M-1, N = A*M, et A est un nombre entier positif supérieur à 1 ; et $\begin{bmatrix} b_0^0 & \cdots & b_{N-1}^0 \\ \vdots & \ddots & \vdots \\ b_0^{M-1} & \cdots & b_{N-1}^{M-1} \end{bmatrix}$ est une matrice de mappage, chaque rangée de la matrice de mappage comprenant A éléments non nuls, des emplacements d'éléments non nuls compris dans différentes rangées de la matrice de mappage sont tous différents, et les éléments non nuls compris dans chaque rangée de la matrice de mappage sont des coefficients de pondération correspondant à des voies logiques comprises dans un groupe de voies logiques correspondant à la rangée.

4. Dispositif de transmission de données selon la revendication 3, dans lequel des normes de coefficients de pondération correspondant à des voies logiques comprises dans un même groupe de voies logiques sont égales.

5. Dispositif de transmission de données selon la revendication 3 ou 4, dans lequel des sommes quadratiques de normes de coefficients de pondération correspondant à des voies logiques comprises dans n'importe lequel des deux groupes différents de voies logiques sont égales.

6. Dispositif de transmission de données selon l'une quelconque des revendications 3 à 5, dans lequel dans le rapport de mappage, des voies logiques qui sont situées aux mêmes emplacements dans différents groupes de voies logiques ont un même coefficient de pondération.

7. Procédé de transmission de données permettant la mise en oeuvre d'une transmission multipoint coordonnée, CoMP, dans lequel le procédé est **caractérisé par** les étapes suivantes :

la division (S21), par un dispositif de transmission de données, de N voies logiques préconfigurées en M groupes de voies logiques selon un rapport de mappage prédéfini entre une voie logique et une voie physique, et le mappage de chacun des groupes de voies logiques sur une ligne physique différente du dispositif de réseau, M et N étant tous les deux des nombres entiers positifs, M est inférieur à N, et M est une quantité de voies physiques du dispositif de réseau ; et
la transmission (S22), par le dispositif de transmission de données, d'un dispositif de réception à l'aide de chacune des voies physiques, d'un signal conçu sur chaque voie logique dans un groupe de voies logiques correspondant à chacune des voies physiques.

8. Procédé selon la revendication 7, dans lequel la division, par un dispositif de réseau, des N voies logiques préconfigurées en M groupes de voies logiques selon le rapport de mappage comprend spécifiquement :

la division de manière égale, par le dispositif de réseau, des N voies logiques préconfigurées en M groupes de voies logiques selon le rapport de mappage.

9. Procédé selon la revendication 8, dans lequel le dispositif de réseau divise de manière égale les N voies logiques préconfigurées en M groupes de voies logiques selon le rapport de mappage suivant, et mappe chacun des groupes de voies logiques sur une voie physique différente du dispositif de réseau :

$$\begin{bmatrix} P^0 \\ \vdots \\ P^{M-1} \end{bmatrix} = \begin{bmatrix} b_0^0 & \cdots & b_{N-1}^0 \\ \vdots & \ddots & \vdots \\ b_0^{M-1} & \cdots & b_{N-1}^{M-1} \end{bmatrix} * \begin{bmatrix} P_0 \\ \vdots \\ P_{N-1} \end{bmatrix},$$

dans lequel

$P_n$ représente un numéro de port d'une voie logique, dans lequel n = 0, ..., N-1, et N est une quantité de voies logiques ; $P^m$ représente un numéro de port d'une voie physique, dans lequel m = 0,..., M-1, N = A*M, et A est un nombre entier positif supérieur à 1 ; et $\begin{bmatrix} b_0^0 & \cdots & b_{N-1}^0 \\ \vdots & \ddots & \vdots \\ b_0^{M-1} & \cdots & b_{N-1}^{M-1} \end{bmatrix}$ est une matrice de mappage, chaque rangée de la matrice de mappage comprenant A éléments non nuls, des emplacements d'éléments non nuls compris dans différentes rangées de la matrice de mappage sont tous différents, et les éléments non nuls compris dans chaque rangée de la matrice de mappage sont des coefficients de pondération correspondant à des voies logiques comprises dans un groupe de voies logiques correspondant à la rangée.

10. Procédé selon la revendication 9, dans lequel des normes de coefficients de pondération correspondant à des voies logiques comprises dans un même groupe de voies logiques sont égales.

11. Procédé selon la revendication 9 ou 10, dans lequel des sommes quadratiques de normes de coefficients de pondération correspondant à des voies logiques comprises dans n'importe lequel des deux groupes différents de voies logiques sont égales.

12. Procédé selon l'une quelconque des revendications 9 à 11, dans lequel dans le rapport de mappage, des voies logiques qui sont situées aux mêmes emplacements dans différents groupes de voies logiques ont un même coefficient de pondération.

11

12

| Processor | | Transceiver |

FIG. 1

| A network device divides N preconfigured logical lanes into M logical lane groups according to a preset mapping relationship between a logical lane and a physical lane, and maps each of the logical lane groups to a different physical lane of the network device, where both M and N are positive integers, M is less than N, and M is a quantity of physical lanes of the network device |

S21

| The network device transmits, to a receiving device by using each of the physical lanes of the network device, a signal configured on each logical lane in a logical lane group corresponding to each of the physical lanes |

S22

FIG. 2

31

32

| Processing module | | Transmission module |

FIG. 3

**REFERENCES CITED IN THE DESCRIPTION**

**Non-patent literature cited in the description**

- Further Considerations on Scenario3. *3GPP Draft, TSG-RAN,* 10 October 2011